# EUROPÄISCHE PATENTSCHRIFT

(11) **EP 2 293 410 B1**
(45) Veröffentlichungstag und Bekanntmachung des Hinweises auf die Patenterteilung: **22.02.2017**
(21) Anmeldenummer: 10175112.1
(22) Anmeldetag: 02.09.2010
(51) Int. Cl.: H02J 3/38, H02J 7/35

(54) **Energiesteuerungsvorrichtung für ein Energienetz mit einer Steuereinheit zum Steuern eines Energieflusses zwischen der Energieerzeugungseinheit, der Energiespeichereinheit, der Lasteinheit und/oder dem Energienetz**
Energy control device for an energy network with a control unit for controlling an energy flow between the energy generator, the energy storage unit, the load unit and/or the energy network
Dispositif de commande d'énergie pour un réseau d'énergie avec une unité de commande pour commander un flux d'énergie entre l'unité de production d'énergie, l'unité de stockage d'énergie, l'unité de chargement et/ou le réseau d'énergie

(30) Priorität: 04.09.2009 DE 102009040090
(43) Veröffentlichungstag der Anmeldung: 09.03.2011
(60) Teilanmeldung: 16206856.3
(73) Patentinhaber: Robert Bosch GmbH, 70442 Stuttgart (DE)
(72) Erfinder: Schmiegel, Dr. Armin Uwe, 22609 Hamburg (DE); Büppelmann, Ralf, 20148 Hamburg (DE); Heimfarth, Stefan Dieter, 35647 Waldsolms (DE)

(56) Entgegenhaltungen:
- EP-A1- 2 075 891
- NOT PROCESSED: 21ST EUROPEAN PHOTOVOLTAIC SOLAR ENERGY CONFERENCE : PROCEEDINGS OF THE INTERNATIONAL CONFERENCE HELD IN DRESDEN, GERMANY, 4 - 8 SEPTEMBER 2006, WIP RENEWABLE ENERGIES, MÜNCHEN, 4 September 2006 (2006-09-04), XP040512749, ISBN: 978-3-936338-20-1

## Beschreibung

Die vorliegende Erfindung bezieht sich auf eine Energiesteuerungsvorrichtung für ein Energienetz und ein Verfahren zum Steuern eines Betriebes einer Energiesteuerungsvorrichtung.

Es sind Energiesteuerungsvorrichtungen bekannt, die z.B. einen Haushalt als Lasteinheit mit Strom versorgen. Eine solche Energiesteuerungsvorrichtung weist eine Energieerzeugungseinheit, wie z.B. eine Photovoltaikanlage, auf, die Energie aus erneuerbaren Ressourcen, wie z.B. Sonneneinstrahlung, erzeugt und dem Haushalt zur Verfügung stellt. Erzeugt die Photovoltaikanlage bei z.B. guten Wetterverhältnis viel Energie, ist der Haushalt ausreichend mit Strom versorgt. Erzeugt die Photovoltaik weniger Energie als der Haushalt verbraucht, z.B. nachts oder bei schlechten Wetterverhältnisses, ist erforderlich, dass der Haushalt seinen Energiebedarf aus dem (öffentlichen) Energienetz deckt. Zu diesem Zwecke weist die Energiesteuerungsvorrichtung eine Netzanschlusseinheit auf, mittels derer die Energiesteuerungsvorrichtung an das Energienetz angeschlossen werden kann, um diesem Energie zu entnehmen. Auch ermöglicht dieser Anschluss, dass die Energiesteuerungsvorrichtung erzeugte Energie an das Energienetz abgeben kann, wenn die Photovoltaikanlage mehr Energie erzeugt als durch den Haushalt verbraucht wird.

Eine solche Energiesteuerungsvorrichtung weist den Nachteil auf, dass der Austausch von Energie zwischen Energiesteuerungsvorrichtung und Energienetz aufwendig ist. Insbesondere ist jeder Energiefluss zwischen Energiesteuerungsvorrichtung und Energienetz zu bilanzieren, was u.a. aufwendige Berechnungsverfahren mit sich bringt.

DE 100 18 943 A1 beschreibt einen Photovoltaik-Wechselrichter bei dem alle für ein Photovoltaikinselsystem erforderlichen Energiequellen und Energiesenken über Wandler ausschließlich an einen Gleichspannungsbus mit frei wählbarem Spannungsniveau gekoppelt sind und eine Regelung bzw. Steuerung dieser Komponenten über die Auswertung des Spannungsniveaus des Gleichspannungsbusses erfolgt. Dazu werden ein Photovoltaikgenerator über einen Anpaßwandler, ein bidirektionaler Laderegler mit einer Batterie und ein Inselwechselrichter mit dem Verbraucher über einen Gleichspannungsbus verbunden und eine Steuer- und Regeleinrichtung für das Energiemanagement über die Auswertung des Spannungsniveaus des Gleichspannungsbusses angeschlossen.

Probleme der Anordnung der DE 100 18 943 A1 liegen in dem eingeschränkten Lastausgleich und insbesondere in der Bilanzierung.

Aus WO 2008/125696 A2 ist eine Lastverwaltungssteuerung bekannt, welche elektrische Energie aus einer Energieerzeugungseinheit auf mehrere elektrische Verbrauchs-Unter-Schaltkreise verteilt. Überschüssige, erzeugte Energie kann einem Speicher-Schaltkreis zugeführt werden. Steigt der Energiebedarf der Unter-Schaltkreise über die Lieferkapazität der Energieerzeugungseinheit, so wird zusätzliche Elektrizität aus dem öffentlichen Netz gezogen. Zu diesem Zweck werden Stromfluss aus dem öffentlichen Netz und der Energieerzeugungseinheit zusammengeführt und gemeinsam in eine Hauptschalttafel eingeleitet. Diese verteilt die elektrische Energie auf die Verbrauchs-Unter-Schaltkreise. Ähnliche Lösungen sind aus GB 2455421 A und EP 1 848 085 A2 bekannt.

In der EP 2 075 891 A1 ist ein Stromversorgungssystem, das sowohl im Inselbetrieb als auch im Verbund mit einem externen Stromnetz betreibbar ist, mit einer Vielzahl an elektrischen Energieerzeugern und Verbrauchern, einem elektrischen Speichersystem und einer Steuereinheit offenbart, wobei die Steuereinheit die Stromverteilung u.a. in Abhängigkeit von einer Wetterprognose, einer Stromverbrauchsprognose, einer Wärmeverbrauchsprognose oder von verbraucher- bzw. erzeugerspezifischen Werten steuert.

Zwar kann mit diesen vorbekannten Lösungen eine laufende elektrische Versorgung mehrerer Verbraucher eines Haushalts erreicht werden. Nachteilig an diesen vorbekannten Lösungen ist aber, dass eine nur unzureichende Effizienz erreicht wird, wenn unvorhergesehene Verbrauchsschwankungen oder Lieferschwankungen auftreten. So wird bei diesen bekannten Lösungen entweder keine ausreichende zeitliche Auflösung im Regelverhalten zwischen Netzstrom und eigenerzeugtem Strom erzielt oder es muss auf Grundlage von gespeicherten Prognosedaten zu Verbrauch eine Schaltung eingestellt werden. Beides führt jedoch dazu, dass Verluste auftreten. Nachteilig ist weiterhin, dass durch diese vorbekannten Lösungen das öffentliche Netz belastet wird, da nicht zuverlässig vermieden werden kann, dass in das öffentliche Netz eingespeist wird, obwohl dieses gerade ein Überangebot an Energie aufweist oder dass aus dem öffentlichen Netz entnommen wird, obwohl dieses gerade eine Unterversorgung aufweist.

Aufgabe der Erfindung ist es, eine Energiesteuerungsvorrichtung bereitzustellen, welche die obene genannten Nachteil vermeidet. Insbesondere ist es ein Ziel der Erfindung, eine für die Effizienz eines Inselenergienetzes optimierte Energiesteuerungsvorrichtung bereitzustellen.

Erfindungsgemäß wird die Aufgabe durch eine Energiesteuerungsvorrichtung für ein Energienetz gelöst, die aufweist: eine Energieerzeugungseinheit, insbesondere eine Photovoltaikeinheit, zum Erzeugen von Energie aus erneuerbaren Ressourcen, eine Energiespeichereinheit zum Speichern von Energie, eine Messvorrichtung zum Ermitteln des Energieverbrauchs einer Lasteinheit (111) zum Verbrauchen von Energie, , eine Netzanschlusseinheit, insbesondere eine Wechselrichtereinheit, zum Verbinden der Energiesteuerungsvorrichtung mit einem Energienetz, zum Entnehmen von Energie aus dem Energienetz und zum Zuführen von Energie in das Energienetz, und eine Steuereinheit zum Steuern eines Energieflusses zwischen der Energieerzeugungseinheit, der Energiespeichereinheit, der Lasteinheit und/oder dem Energienetz. Erfindungsgemäß ist die Steuereinheit ausgebildet, um die Menge der Energie, welche in das Energienetz eingespeist wird, in Abhängigkeit von der Menge der Energie, die von der Lasteinheit verbraucht wird, zu steuern.

Erfindungsgemäß wird eine bedarfsgerechte und optimierte Versorgung realisiert, indem beispielsweise ermöglicht wird, dass die Steuereinheit bevorzugt den Energiefluss zwischen der Energiesteuerungsvorrichtung und dem Energienetz so steuert, dass ein erster Betrag derjenigen Energie, die die Lasteinheit von der inselinternen Energieerzeugungseinheit bezieht und verbraucht, im wesentlichem einem zweiten Betrag von derjenigen Eergie entspricht, die die Lasteinheit von dem Energienetz bezieht und verbraucht. Energieüberschüsse innerhalb der Energiesteuerungsvorrichtung werden in der Energiespeichereinheit gespeichert, um zu Zeiten, in denen die Energieerzeugungseinheit zu wenig Energie für die Lasteinheit bereitstellt, ebenfalls die Beträge von intern und extern bereitgestellter Energie im Gleichgewicht zu halten.

Vorteilhaft an der Erfindung ist einerseits, dass sämtliche Verbraucher des Insel netzes als eine einzige Lasteinheit und folglich über eine einzige Verbrauclisleitung mit der Steuereinheit verbunden sind. Es ist daher kein differenzierter Anschluss mehrerer Lasteinheiten an die Steuerungseinheit und keine separate Erfassung des Verbrauchs und entsprechende Zuweisung bestimmter Energiearten an einzelne Lasteinheiten erforderlich.

Dies wird insbesondere vorteilhaft erreicht, indem die Steuereinheit die schwankenden Liefermengen und Abnahmemengen nach dem Strom regelt. Dies ermöglicht es, die Mischung aus Strom, der aus dem öffentlichen Netz entnommen wird und Strom, der aus der Energieerzeugungseinheit geliefert wird, gezielt zu steuern. Hierdurch wird eine Regelfrequenz erreicht, bei der ein Regelvorgang in wenigen Sekunden oder sogar mehrere Regelvorgänge pro Sekunde erfolgen und hierdurch die Verluste signifikant reduziert.

Es ist weiter vorteilhaft, wenn die Energieerzeugungseinheit mit der Steuereinheit solcherart signaltechnisch gekoppelt ist, dass nur genau die Menge der von der Lasteinheit benötigten Energie von der Energieerzeugungseinheit an einen Wechselrichter geleitet wird und darüber hinaus erzeugte Energie ohne Durchlaufen des Wechselrichters direkt der Speichereinheit zugeführt wird. Zu diesem Zweck kann über die Steuereinheit eine regelbare, direkte Gleichstrom-Verbindung zwischen der Energieerzeugungseinheit und der Speichereinheit hergestellt werden, um auf diese Weise eine äußerst verlustarme Übertragung der Energie zu ermöglichen.

In gleicher Weise ermöglicht es die erfindungsgemäße Energiesteuerungsvorrichtung, lediglich einen geregelten Betrag an Energie über den Wechselrichter in das öffentliche Netz einzuspeisen und einen anderen Betrag unmittelbar als Gleichstrom der Speichereinheit zuzuführen.

Vorteilhaft ist hierzu, dass sowohl die Energieerzeugungseinheit als auch die Lasteinheit, die Speichereinheit und das öffentliche Netz direkt und ohne zwangsläufige Zwischenschaltung eines Wechsel- oder Gleichrichters mit der Steuereinheit verbunden sind. Die Steuereinheit kann hierdurch in optimaler Weise den Stromfluss zwischen diesen Einheiten regeln, gfs. aus der Energieerzeugungseinheit bezogenen und für die Lasteinheit oder das öffentliche Netz vorgesehenen Strom der Wechselrichtereinheit zuführen, um ihn nachfolgend als Wechselstrom den Verbrauchern bzw. dem öffentlichen Netz zuzuführen und gfs. aus dem öffentlichen Netz bezogenen Strom einem Gleichrichter zuführen, um ihn dann der Speichereinheit zuzuführen. Die Steuereinheit ist aber darüber hinaus in der Lage, Strom aus dem öffentlichen Netz direkt der Lasteinheit zuzuführen und Strom aus der Energieerzeugungseinheit direkt der Speichereinheit zuzuführen, ohne dass hierbei ein Gleich- oder Wechselrichter durchlaufen wird.

Grundsätzlich ist zu verstehen, dass die Speichereinheit als zentrale, im Bereich der Energieerzeugungseinheit oder der Steuereinheit angeordnete Speichereinheit vorgesehen sein kann. In bestimmten Anwendungsfällen kann die Speichereinheit aber auch Bestandteil eines Verbrauchers der Lasteinheit sein und kann insbesondere als summierte Form mehrerer solcher Speicherformen ausgebildet sein.

Die erfindungsgemäße Energiesteuerungsvorrichtung ermöglicht vorzugsweise eine Begrenzung der Einspeiseleistung in das öffentliche Netz. Diese Begrenzung kann erfindungsgemäß erreicht werden, indem elektrische Leistung aus der Energieerzeugungseinheit, welche die Summe der von den Lasteinheiten verbrauchten elektrischen Leistung und der aufgrund einer Einspeisebegrenzung maximal in das öffentliche Netz einzuspeisende Leistung überschreitet, in der Speichereinheit gespeichert wird. Desweiteren ermöglicht die erfindungsgemäße Energiesteuerungsvorrichtung bei einem mehrphasigen öffentlichen Netz auch eine phasenbezogene Begrenzung der Einspeiseleistung, indem beispielsweise solche überschüssige Leistung bzw. Energie auf solche Phasen eingespiesen wird, bei denen eine Einspeisegrenze noch nicht erreicht ist, hingegen auf aber Phasen, bei denen die Einspeisegrenze bereits erreicht ist, nicht weitere Leistung eingespeist wird.

Vorteilhaft wird dies insbesondere durch die Speichereinheit, die in schnellen Be- und Entladungszyklen arbeitet, und durch einen schnellen Wechsel zwischen den verschiedenen Energieerzeugungseinheiten (intern zur Energiesteuerungsvorrichtung und extern (d.h. im Energienetz)) oder gar in einem Mischbetrieb dieser Energiequellen erreicht.

Die vorliegende Erfindung erlaubt eine gemischte, optimierte Verwendung der beiden Energiequellen, d.h. der Energiesteuerungsvorrichtung-internen Energieerzeugungseinheit und der Energienetz-Energieerzeugungseinheit. Durch eine Prädiktionseinheit können Verluste durch An- oder Ablaufzeiten der Lasteinheit (bzw. Lasteinheiten) erkannt und systemisch kompensiert werden. Durch einen Mischbetrieb der inselinternen- und externen Energieerzeugungseinheiten entfallen Einschränkungen bezüglich der Lastennutzung.

Durch die vorliegende Erfindung existieren kaum Einschränkung bei der Verwendung der Lasteinheit (bzw. Lasteinheiten), da sowohl Energie aus der internen, als auch von der externen Energieerzeugungseinheit verfügbar ist. Des Weiteren wird die Energie von der internen Energieerzeugungseinheit in einer optimierten Weise verbraucht.

Bevorzugt ist die Steuereinheit ausgestaltet, einen Energiefluss von der Energieerzeugungseinheit an die Energiespeichereinheit zu veranlassen, wenn die erzeugte Energie den Energieverbrauch der Lasteinheit übersteigt.
Vorteilhaft wird erreicht, dass die Steuereinheit in Abhängigkeit von dem momentan (oder auch prognostizierten) Energiebedarf der Lasteinheit entscheidet, ob Energie der Speichereinheit bzw. dem Energienetz zuzuführen ist. Es wird erreicht, dass nur im Fall eines Energieüberschusses Energie von der Energiesteuerungsvorrichtung an das Energienetz abgegeben wird. Der Aufwand der Bilanzierung lässt sich reduzieren.

Bevorzugt ist die Steuereinheit ausgestaltet, einen Energiefluss von der Energieerzeugungseinheit und/oder von der Energiespeichereinheit zu dem Energienetz in einer Menge zu steuern, welche von der Menge der Energie, die von der Lasteinheit aus dem Energienetz entnommen wird, abhängt, vorzugsweise dieser Menge entspricht. Hierdurch kann auch bei Mindererzeugung von Energie ein Gleichgewicht zwischen entnommener und eingespeister Energie gehalten werden. Ein weiterer Vorteil dieser Ausgestaltung liegt darin, dass die Energiespeichereinheit möglichst stets Energiereserven aufweist, um die Lasteinheit mit Energie zu versorgen.

Mit dieser Fortbildung wird erreicht, dass Schwankungen im Einspeise- und Entnahmeverhalten durch die Regelung der erfindungsgemäßen Steuereinheit weitestgehend vermieden oder zumindest über einen solch langen Zeitraum ausgeglichen werden könne, der dem Regelverhalten eines Kraftwerks, welches das öffentliche Netz speist, entspricht. So kann die Steuereinheit insbesondere solcherart ausgebildet sein, dass sie durch Steuern der Energieflüsse zwischen Energieerzeugungseinheit, Speichereinheit, Lasteinheit und öffentlichem Netz eine über einen Zeitraum von wenigen Sekunden, Minuten, oder einer oder mehreren Stunden betragsmäßig übereinstimmende Entnahme und Einspeisung aus dem / in das öffentliche Netz erzielt. In ebensolcher Weise kann erreicht werden, dass über solche Zeiträume ein konstantes Verhältnis zwischen Entnahme und Einspeisung eingeregelt wird. Hierdurch werden kurzfristige Netzschwankungen bereits im Bereich der Einspeise-/Entnahmestelle ausgeglichen und lediglich bei länger anhaltender Unter- oder Überversorgung muss ein über die erfindungsgemäße Energiesteuerungsvorrichtung an das öffentliche Netz angeschlossener Haushalt die Höhe der Netzentnahme oder Netzeinspeisung ändern. Solche langfristigen Schwankungen belasten das Netz jedoch weit weniger und können im öffentlichen Netz selbst aufgefangen werden.

Insbesondere kann mit dieser Fortbildung eine zeitpunktsbezogene Übereinstimmung der Einspeise- und Entnahmemenge erreicht werden. Eine virtuelle Bilanzhülle um einen Haushalt mit einer Energieerzeugungseinheit, z.B. einer Photovoltaikanlage, und einem Einspeise- und Entnahmeanschluss an das öffentliche Netz stellt sich in diesem Fall zu jedem Zeitpunkt neutral dar. Diese Ausgestaltung kann bei Verwendung eines Wechselrichters, der nur zur Wechselrichtung einer oder einiger von mehreren Phasen eines Hausnetzes, das an ein entsprechend mehrphasiger öffentliches Netz angeschlossen ist, ausgebildet ist (beispielsweise ein einphasiger Wechselrichter in einem dreiphasigen Hausnetz) die Stabilität des öffentlichen Netzes erhöhen. In einer solchen Ausgestaltung wird der Strom aus der Energieerzeugungseinheit auf nur eine bzw. einige Phasen der Lasteinheiten des Hausnetzes geleitet. Die erfindungsgemäße Steuerungseinrichtung kann dann beispielsweise solcherart ausgebildet sein, dass bei einer Unterversorgung einer der anderen Phasen (bei dreiphasigem Stromnetz also einer der beiden anderen Phasen) diese Unterversorgung aus dem öffentlichen Netz durch Entnahme ausgeglichen wird. Zugleich wird jedoch auf der/den durch die Energieerzeugungseinheit versorgten Phase(n) Strom in das öffentliche Netz eingespeist und hierdurch erreicht, dass der Energiefluss in das öffentliche Netz betragsmäßig dem Energiefluss aus dem öffentlichen Netz entspricht.

Die erfindungsgemäße Fortbildung ist auch dann vorteilhaft, wenn der in der Energieerzeugungseinheit erzeugte Strom mittels eines Mehrphasenwechselrichters auf alle Phasen eines öffentlichen Netzes wechselgerichtet wird, beispielsweise mittels eines dreiphasigen Wechselrichters bei einem Dreiphasennetz. In diesem Fall treten einerseits laufend Schwankungen in dem durch die Lasteinheiten verursachten Leistungsbedarf auf den einzelnen Phasen auf, die zu unterschiedlichen Belastungen der Phasen untereinander führen. Zugleich kann auch im öffentlichen Netz ein Ungleichgewicht in der Leistungsbereitstellung auf den einzelnen Phasen untereinander bestehen. In solchen Situation kann mit der erfindungsgemäßen Steuerungsvorrichtung die Stabilität des öffentlichen Netzes durch neutrales Entnahme und Einspeiseverhalten verbessert werden. Hierzu wird beispielsweise eine Überbeanspruchung auf einer durch die Lasteinheiten stark beanspruchten Phase durch Entnahme aus dem öffentlichen Netz ausgeglichen und zugleich auf einer oder mehreren anderen Phasen Strom in das öffentliche Netz eingespeist. Zugleich oder alternativ kann eine überversorgte Phase des öffentlichen Netzes durch einphasige Entnahme aus dieser Phase entlastet werden. Weiterhin kann eine unterversorgte Phase des öffentlichen Netzes durch einphasige Einspeisung auf diese Phase aus der Energieerzeugungseinheit oder der Speichereinheit unterstützt werden.

Bevorzugt ist die Steuereinheit ausgestaltet, den Energiefluss zu der Energiespeichereinheit zu veranlassen, bis die Energiespeichereinheit vollständig oder bis zu einem vorbestimmten Grad geladen ist. Vorteilhaft kann die Energiesteuerungsvorrichtung stets auf die Energiespeichereinheit als Energiereserve zugreifen, um den Bedarf der Lasteinheit zu decken. Ein Energiefluss von dem Energienetz zu der erfindungsgemäßen Energiesteuerungsvorrichtung kann weiter reduziert werden.

Bevorzugt weist die Steuereinheit eine Prädiktionseinheit zum Vorherbestimmen des zu steuernden Energieflusses auf. Ein Vorteil dieser bevorzugten Ausführungsform liegt darin, dass der Energiefluss in Abhängigkeit von Faktoren bestimmt werden kann, die einen üblichen und/oder zu erwartenden Energieerzeugungsverlauf und/oder Energieverbrauchsverlauf repräsentieren. Die Speicherung von Energie und die Zuführung von Energie in das Energienetz kann erfindungsgemäß präzise gesteuert werden, um eine optimale Versorgung der Lasteinheit sicherzustellen.

Bevorzugt ist die Prädiktionseinheit ausgestaltet, den Energieverbrauch der Lasteinheit, insbesondere auf Basis eines Referenzzeitraumes und/oder Uhrzeit-, Wochentag-, und/oder Jahreszeitinformationen, und/oder die erzeugte Energie durch die Energieerzeugungseinheit, insbesondere auf Basis von Wetterinformationen, Referenzdaten und/oder Messdaten, vorherzubestimmen. Vorteilhaft wird erreicht, dass der Energieerzeugungsverlauf besonders präzise vorherbestimmt werden kann, wodurch ein Energiefluss entsprechend vorgeplant und zwischen Energienetz und Energiesteuerungsvorrichtung weiter reduziert werden kann.

Noch weiter ist es bevorzugt, wenn die Energiespeichereinheit (115) mittels einer ersten Kondensatoreinheit und einer zweiten Kondensatoreinheit (155) mit der Energieerzeugungseinheit (113) und der Netzanschlusseinheit (114) verbunden ist. Vorteilhaft wird durch diese Fortbildung eine Symmetrisierung und Lastreduktion auch im Fall von asymmetrischen Lasten erreicht. Dabei können die ersten und zweiten Kondensatoreinheiten jeweils ein oder mehrere Kondensatoren aufweisen. So sind die Einsatzbedingungen der erfindungsgemäßen Energiesteuerungsvorrichtung nicht auf symmetrische Lasteinheiten beschränkt, sondern die zweite Kondensatoreinheit ermöglicht eine Symmetrisierung und Lastreduktion für asymmetrische Lasteinheiten. Dabei ist es bevorzugt, wenndie Energiesteuerungsvorrichtung ferner einen Laderegler zum Regeln eines Aufladens der Energiespeichereinheit aufweist, wobei der Laderegler die erste Kondensatoreinheit aufweist und mittels der zweiten Kondensatoreinheit mit der Energieerzeugungseinheit und der Netzanschlusseinheit verbunden ist. Durch die erfindungsgemäße Anordnung der ersten und zweiten Kondensatoreinheiten wird vorteilhaft erreicht, dass für asymmetrische Lasten eine Symmetrisierung und Lastreduktion erreicht werden kann.

Bevorzugt weist die Energiespeichereinheit mindestens ein Li-Ionen-Speicherelement und/oder mindestens ein Reduktions-Oxidations-Reaktions-Speicherelement auf. Solche Speicherelemente weisen besonders gute Eigenschaften wie lange Lebensdauer, niedrige Lebensdauerkosten, hoher Gesamtwirkungsgrad etc. auf. Der Einsatz in der erfindungsgemäßen Energiesteuerungsvorrichtung ist daher besonders vorteilhaft.

Noch weiter ist es bevorzugt, wenn die Steuereinheit ausgebildet ist, um eine solche Menge an Energie ins Energienetz einzuspeisen, wie sie aus dem Energienetz entnimmt, um hierdurch eine optimierte Vergütung zu erhalten.

In einem weiteren Aspekt bezieht sich die Erfindung auf ein Verfahren zum Steuern eines Betriebes einer Energiesteuerungsvorrichtung nach einem der vorstehenden Ansprüche mit dem Schritt: Steuern eines Energieflusses zwischen der Energieerzeugungseinheit, der Energiespeichereinheit, der Lasteinheit und/oder dem Energienetz in Abhängigkeit von der durch die Lasteinheit verbrauchten Energie.
Bevorzugt weist das Verfahren ferner die Schritte auf: Steuern eines Energieflusses von der Energieerzeugungseinheit an die Energiespeichereinheit, wenn die erzeugte Energie den Energieverbrauch der Lasteinheit übersteigt.
Bevorzugt weist das Verfahren ferner den Schritt auf:
Steuern eines Energieflusses zu der Energiespeichereinheit, bis die Energiespeichereinheit vollständig oder bis zu einem vorgegebenen Ladezustand geladen ist.
. Bevorzugt weist das Verfahren ferner den Schritt auf:
   Vorherbestimmen des Energieverbrauchs der Lasteinheit, insbesondere auf Basis eines Referenzzeitraumes und/oder Uhrzeit-, Wochentag-, und/oder Jahreszeitinformationen, und/oder
   Vorherbestimmen der erzeugten Energie durch die Energieerzeugungseinheit, insbesondere auf Basis von Wetterinformationen, Referenzdaten und/oder Messdaten, und
Steuern des Energieflusses gemäß des vorbestimmten Energieverbrauchs und/oder der vorbestimmten erzeugten Energie.

Das Verfahren kann weiter fortgebildet werden durch Einspeisen einer Menge an Energie aus der Energieerzeugungseinheit und/oder der Energiespeichereinheit in das Energienetz, welche der Menge an Energie, die von der Lasteinheit verbraucht wird, entspricht. Schließlich ist es bevorzugt, wenn eine solche Menge an Energie ins Energienetz eingespeist wird, wie aus dem Energienetz entnommen wird.

Die in Bezug auf die erfindungsgemäße Energiesteuerungsvorrichtung erläuterten Vorteile gelten in analoger Weise.

Die Erfindung wird im Folgenden anhand von bevorzugten Ausführungsformen unter Bezugnahme auf Figuren erläutert, wobei
- Figs. 1 und 2: schematische Überblicke über einen konventionellen Energiefluss zwischen Energiesteuerungsvorrichtung und Energienetz zeigen;
- Fig. 3: einen schematischen Überblick über die erfindungsgemäße Energiesteuerungsvorrichtung und deren Betrieb zeigt;
- Fig.4: eine Darstellung einer erfindungsgemäßen Energiesteuerungsvorrichtung zeigt;
- Fig. 5: ein Ausführungsbeispiel einer erfindungsgemäßen Energiesteuerungsvorrichtung zeigt;
- Fig. 6: eine mittlere Energieerzeugung und -verbrauch zeigt;
- Fig. 7: ein Zählerkonzept zeigt;
- Fig. 8: eine Schaltung einer erfindungsgemäßen Energiesteuerungsvorrichtung zeigt; und
- Fig. 9: ein Display einer Energiesteuerungsvorrichtung zeigt.

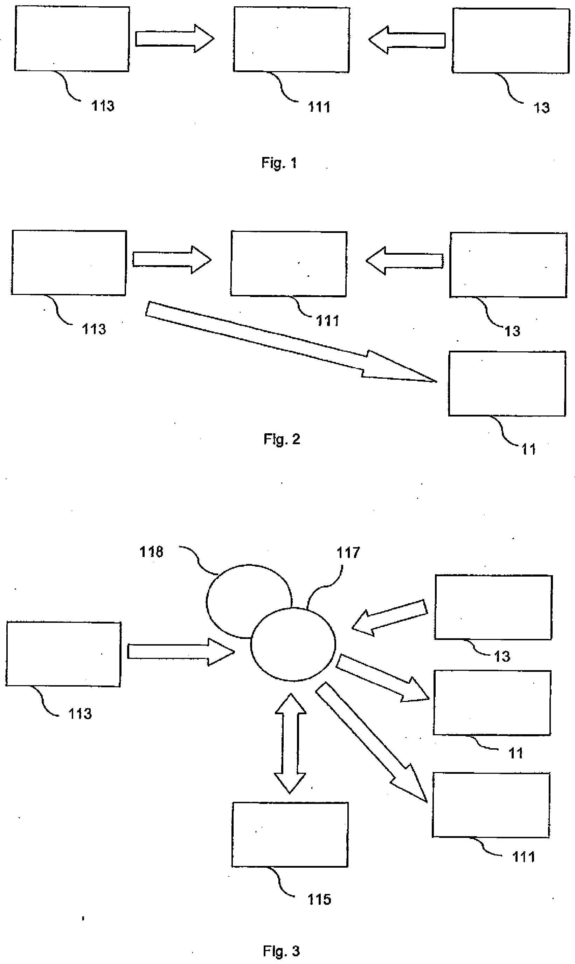

Figur 1 illustriert den Energiefluss von Energieerzeugungseinheit 113 bzw. Energienetz 13 zu Lasteinheit 111. Die Energieerzeugungseinheit 113 ist eine zeitabhängige, fluktuierende und nur bedingt prädiktionierbare Energiequelle, wie zum Beispiel eine Photövoltaik-(PV-)Anlage oder eine Windenergieanlage. Aus ökologischen Gründen hat die Energieerzeugung aus erneuerbaren Ressourcen wie Sonnenlicht oder Wind durch die Energieerzeugungsanlage 113 Vorrang vor der zum Beispiel in einem Kohlekraftwerk hergestellten Energie des Energienetzes 13. Das Energienetz 13 erzeugt die Energie hingegen zeitlich konstant und gut prädiktionierbar. Die Lasteinheit 111 ist eine zeitabhängige, fluktuierende und nur bedingt prädiktionierbare Last, wie zum Beispiel ein privater Haushalt oder ein Kleinbetrieb.

Die Lasteinheit 111 und die Energieerzeugungseinheit 113 sind in einer Energiesteuerungsvorrichtung enthalten. Für den Betreiber der Energiesteuerungsvorrichtung ist es technisch und bilanzorisch von Vorteil, möglichst wenig Energiefluss zwischen der Energiesteuerungsvorrichtung und dem Energienetz 13 zu veranlassen. In anderen Worten, es ist für den Lastbetreiber von Vorteil, Energie aus der Energieerzeugungseinheit 113, nicht aber aus dem Energienetz 13 zu verbrauchen. Da jedoch die Energieerzeugungseinheit 113 zeitabhängig, fluktuierend und bedingt prädiktionierbar Energie erzeugt, kann es einerseits Zeiten eines Energieüberflusses und andererseits Zeiten eines Energiebedarfs der Lasteinheit 111 der Energiesteuerungsvorrichtung geben. Liegt ein solcher Energiebedarf vor, ist die Lasteinheit 11 gezwungen, Energie aus dem Energienetz 13 zu entnehmen. Liegt ein Energieüberschuss vor, kann dieser nicht abgeführt werden.

Um den Energieüberschuss abführen zu können, ist eine Lasteinheit 11 erforderlich, die als Energiesenke des Energienetzes wirkt und die dieser zugeführte Energie entsprechend vergütet, wie es in Figur 2 dargestellt ist. Um einen optimalen Verbrauch der durch die Energieerzeugungseinheit 113 zu ermöglichen, wird efindungsgemäß ein optimierter Eigenverbrauch gemäß Figur 2 vorgeschlagen. Die Energieerzeugungseinheit 113 kann optional eine Energiespeichereinheit aufweisen, die bevorzugt in der physikalischen Nähe der Energieerzeugungseinheit 113 und der Lasteinheit 111 angeordnet ist. Bevorzugt weist die Energiespeichereinheit einen (oder mehrere) Li-Ionen Akku auf. In einer weiteren bevorzugten Ausführungsform weist die Energiespeichereinheit ein Red-Ox-System auf, um eine Akkukombination von hoher und geringer dynamischer Verfügbarkeit bereitzustellen. Das System der Figur 2 stellt so einen statischen Abgleich von Über- und Unterangebot der Energieerzeugungseinheit 113 bereit: kann Die Energieerzeugungseinheit 113 den Bedarf der Lasteinheit 111 nicht decken, wird auf das Energienetz 13 zurückgegriffen; Überschüsse können ins Energienetz eingespeist und in der Lasteinheit 11 verbraucht (und entsprechend vergütet) werden.

Figur 3 zeigt ein modifiziertes Schema der Figur 2: Der Energiefluss zwischen den einzelnen Komponenten wird durch die Steuereinheit 117 gesteuert, die optional eine Prädiktionseinheit 118 aufweist. Die Steuereinheit 117 ist ausgestaltet, um den folgenden Betrieb zu steuern: Die überschüssig in der Energieerzeugungseinheit 113 erzeugte Energie leitet die Steuereinheit 117 an die Energiespeichereinheit 115 und/oder an die Lasteinheit 111 um. Sollte weder die Energieerzeugungseinheit 113 noch die Energiespeichereinheit 113 genügend Energie vorrätig haben, um den Energiebedarf der Lasteinheit 111 zu decken, veranlasst die Steuereinheit 117 die Deckelung des Bedarfes durch Energie aus dem Energienetz 13. Sollte die Speicherkapazität der Energiespeichereinheit 115 nicht ausreichen, ist es möglich, dass die Steuereinheit 117 Energie zu die Lasteinheit 11 leitet. Erfindungsgemäß wird so eine bedarfsgerechte Verwendung von Energie ermöglicht. Da die Quelle 13 und die Senke 11 des Energienetzes im Falle des öffentlichen Energienetzes identisch sind, handelt es sich um einen reinen bilanzorischen Eigenverbrauch, da die Energie von der Energieerzeugungseinheit 113 mit der Bilanz der Energieerzeugungseinheit 113 und der Senke bzw. Lasteinheit 11 verrechnet wird.

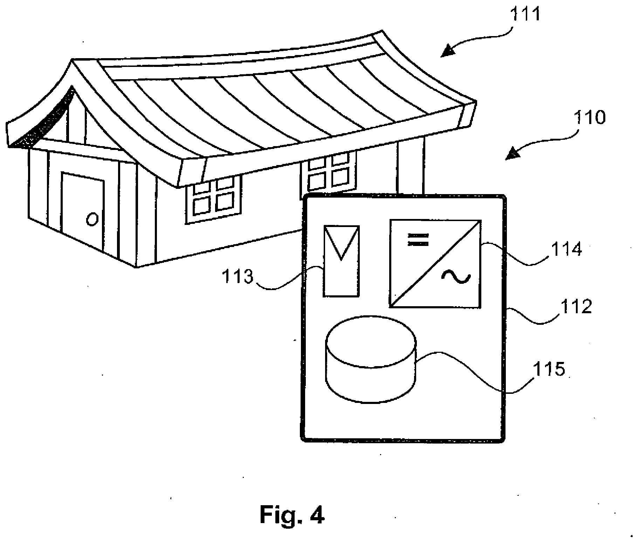

In Figur 4 ist eine Energiesteuerungsvorrichtung mit einer Lasteinheit 111 und einem Inselkraftwerk 112 gezeigt. Das Inselkraftwerk 112 weist eine Energieerzeugungseinheit 113, eine Netzanschlusseinheit, insbesondere Wechselrichtereinheit, 114 und eine Energiespeichereinheit 115 auf. Die Energieerzeugungseinheit 113 ist bevorzugt eine Photovoltaikanlage, wobei die Erfindung nicht auf die Energieerzeugung durch Sonnenenergie beschränkt ist, sondern ebenso gut Energie aus Wind, Biogas oder anderen erneuerbaren Ressourcen gewinnen kann. Ein erfindungsgemäßes Inselenergienetz weist zumindest eine erfindungsgemäße Energiesteuerungsvorrichtung der Figur 4 auf.

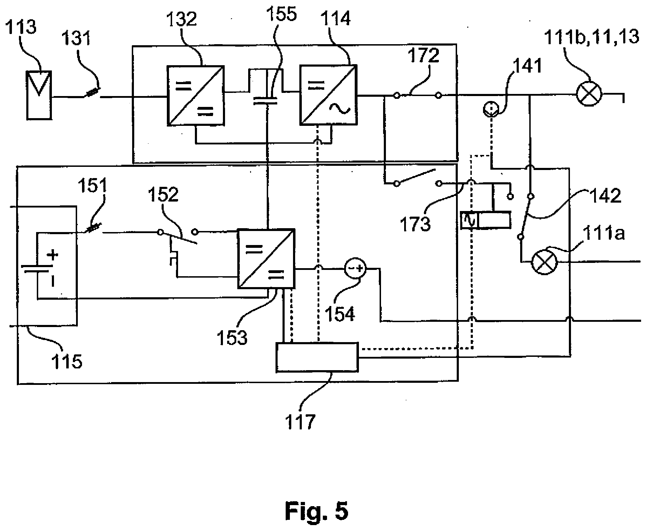

Eine beispielhafte Realisierung der Erfindung ist in Figur 5 dargestellt. In diesem Beispiel dient die PV-Anlage als Energiequelle bzw. Energieerzeugungseinheit 113. Das sogenannte "Grid" (Energienetz) 11, 13 ist im rechten Teil der Figur 5 gezeigt. In einer Meterbox 141 erfolgt die Verrechnung und Bilanzierung der ausgetauschten Energie. Bei einer Last von mehr als 5kWp wird die Lasteinheit 111 b, bei einer Last von 5kWp oder weniger wird die Lasteinheit 111a geschaltet.

Der Inverter (der in Figur 5 obere Kasten) und das Energiemanagementsystem 117 bilden die Prädiktionseinheit und die Steuereinheit. Der in Figur 5 untere Kasten bildet die Energy Storage Box mit der Energiespeichereinheit 115.

Solange der die Energieerzeugungseinheit 113 (zugeschaltet mittels Schalter 131 und umgewandelt mittels PV Konverter 132) genügend Energie produziert, wird ihre Energie direkt über den Inverter 114 in den Haushalt übertragen. Sollte ein Überschuss vorliegen, wird dieser in der Energiespeichereinheit 115 (zugeschaltet mittels Schaltern 151 und 152) gespeichert. Bei einem Mangel, wird auf die Energiespeichereinheit 115 bzw. dem Grid 13 zurückgegriffen.

Figur 5 illustriert eine Backup-Line 173, die dazu dient, im Fall eines Fehlens bzw. Ausfallens der externen Energieerzeugungseinheit 13, direkt die Energie zu übertragen. Die Backup-Line 173 ist wechselseitig zu Schalter 172 angeordnet. Der Schalter 142 dient der Schaltung der Lasteinheit 111a zu der Backup-Line 173.

Erfindungsgemäß ist die Energy Storage Box mit dem Inverter mittels des zweiten Kondensators 155 gekoppelt, der eine Symmetrisierung und Lastreduktion im Fall von asymmetrischen Lasten ermöglicht. Der erste Kondensator ist in dem Laderegler 153 enthalten, der mit der DC Spannungsversorgung 154 verbunden ist.

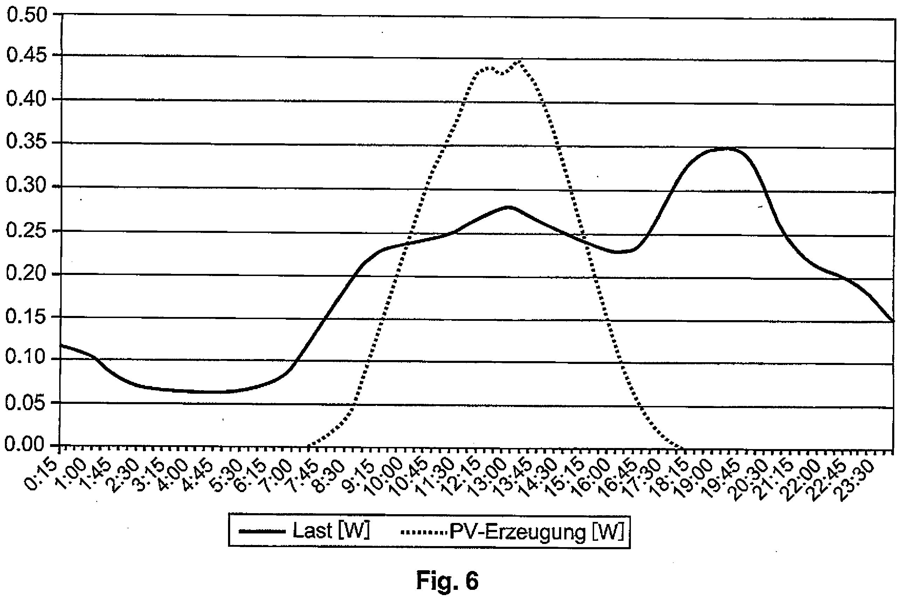

Die Einspeise- und Verbrauchskurven eines typischen Haushalts verlaufen nicht parallel (Figur 6). Will man den Eigenverbrauch maximieren, ist entweder eine Umstellung der Verbrauchsbedingungen oder ein geeignetes Speichermedium erforderlich. Hinzu kommt, dass in Deutschland ein dreiphasiges Netz mit einer Vielzahl dreiphasig betriebener Endgeräte vorliegt, während die Einspeisung von Endverbraucheranlagen überwiegend mit einphasigen Stringwechselrichtern erfolgt.

Figur 6 zeigt eine mittlere PV-(Photovoltaik-) Stromproduktion und mittlere Last eines 6 Personenhaushaltes. Deutlich ist der Überschuss an PV-Leistung in der Mittagszeit zu erkennen.

Um dennoch den Eigenverbrauch zu optimieren, besteht ein erfindungsgemäßer Ansatz darin, nicht mehr zu versuchen, produzierte PV-Energie unmittelbar und vollständig in das Netz einzuspeisen, sondern stets nur genau so viel PV-Strom in das Netz einspeisen, wie gerade verbraucht wird und überschüssige PV-Energie zwischenzuspeichern.

Um eine effektive Systemlösung mit Speicherung technisch zu realisieren, gilt es, die Anforderungen an ein solches System zu identifizieren. Hierzu zählen u.a. folgende Forderungen:
- Garantierte Batterielebensdauer von 20 Jahren
- Niedrige Lebensdauerkosten
- Hohe Zyklenfestigkeit der Batterie über die Lebensdauer
- Hoher Gesamtwirkungsgrad von ca. 95 %inklusive Batterie
- Geringe Baugröße, vergleichbar mit einem handelsüblichen Kühlschrank
- Keine Betriebsrisiken
- Hohe Verlässlichkeit über die gesamte Lebensdauer
- 5kWp Maximalleistung
- 5kWh - 8kWh Batteriekapazität
- Maximale Einbauzeit: vier Stunden.

Hocheffiziente Lithium-Ionen Akkumulatoren entsprechen z. B. diesen Anforderungen. Die Größe des zu verwendenden Speichers definiert sich anhand unterschiedlicher Parameter, wie u. a.: Größe der PV-Anlage, Höhe des eigenen Verbrauchs, Sicherheitsbedürfnis des Nutzers, Wirtschaftlichkeit etc.

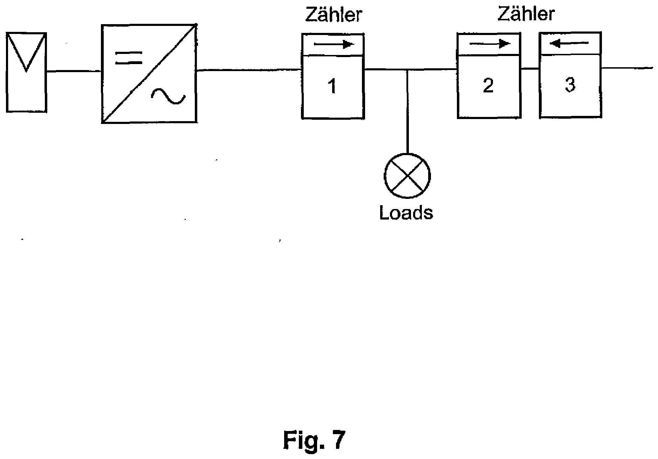

Figur 7 zeigt ein Zählerkonzept zur Bestimmung des Eigenverbrauchs der selbsterzeugten Energie. Die Zähler 2 und 3 können in ein Gerät integriert werden.

Das erfindungsgemäße Inselnetz ist in der Lage, zeitgleich die aktuell verbrauchte Strommenge bedarfsgerecht zur Verfügung zu stellen. Die Energie wird entweder direkt aus der PV·Anlage, aus dem Speicher oder auch aus einer Kombination beider Quellen bereitgestellt. Nur wenn aus diesen Quellen nicht genug Energie zur Verfügung gestellt werden kann, wird auf Netzstrom zurückgegriffen, um beispielsweise kurzfristig ansteigende Bedarfe zu decken. Steht das Netz wegen eines Ausfalls nicht zur Verfügung, wird das System in der Lage sein, erzeugten Strom zu speichern und/oder bei Bedarf als Backup Leistungen bis zu einer definierten Größe aus den bei den Quellen bedarfsgerecht zur Verfügung zu stellen.

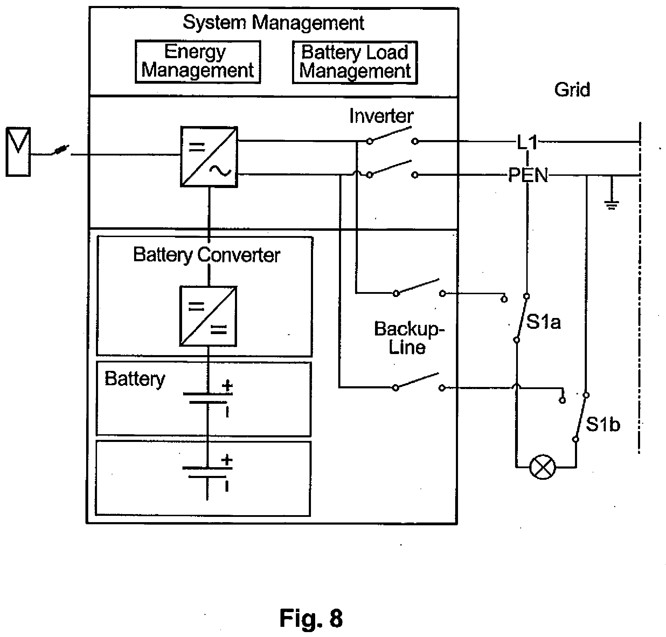

Figur 8 veranschaulicht eine erfindungsgemäße Ausführungsform. Wechselrichter, Batterieladegerät und Batteriemodule werden in einem Gerät integriert. Zusätzlich wird eine Backup·Line zur Verfügung gestellt, die im Fall eines Stromausfalls Lasten bis zur definierten Größe bedarfsgerecht versorgen kann.

Figur 8 zeigt eine schematische Darstellung eines erfindungsgemäßen Inselnetzes für die Optimierung des PV-gestützten Eigenverbrauchs. Das Inselnetz integriert Wechselrichter, Batteriemodule und Batterieladegerät in einem Gerät. Neben dem normalen Anschluss für die Einspeisung wird ein weiterer Anschluss für die Notversorgung bereitgestellt. Die Schalter S1a und S1b dienen der Zu- und Abschaltung von Lasten an die Notversorgung und können vom Energiemanagement bedient werden

Des Weiteren weist die erfindungsgemäße Energiesteuerungsvorrichtung ein intelligentes Systemmanagement auf, welches die Energieflüsse und die Funktion der Komponenten regelt und überwacht. Hierzu misst das Energiemanagement die aktuelle Last auf allen drei Phasen und ermittelt so die vom Wechselrichter bereitzustellende Last.

Parallel hierzu speichert der Battery Converter, ein Laderegler mit einem sehr hohen Wirkungsgrad, überflüssigen PV-Strom in die Batterien, bzw. entnimmt der Batterie den Differenzbetrag aus PV-Strom und einzuspeisender Leistung. Die Energiesteuerungsvorrichtung kompensiert die hoch dynamischen Leistungsschwankungen, die für PV-Strom kennzeichnend ist und unterstützt den Wechselrichter bei der Bereitstellung der exakten Leistung.

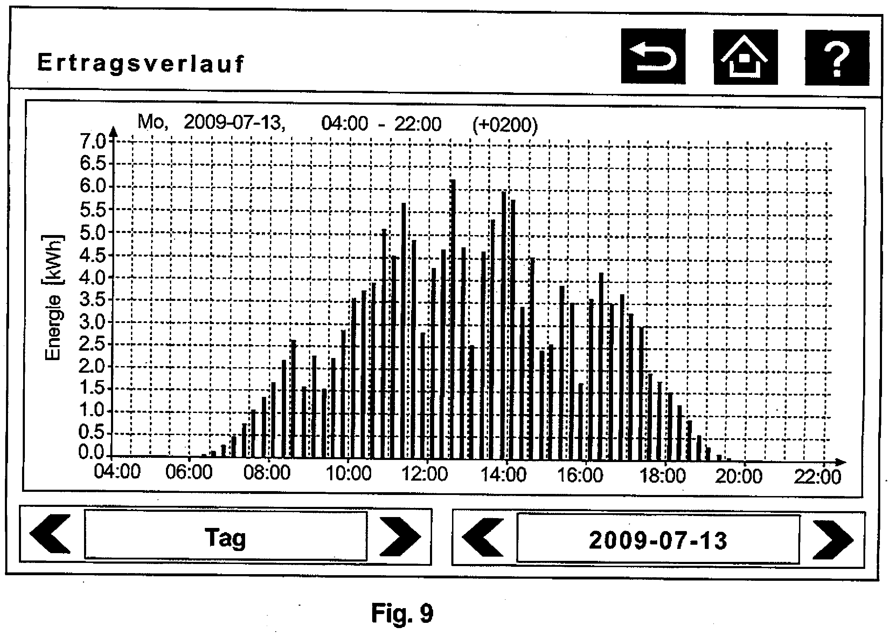

Das System ist mit einem Display ausgestattet, um dem Nutzer und Installateur wichtige Informationen über den produzierten, gespeicherten und selbst verbrauchten Strom darstellen zu können (Figur 9). So ermöglicht das System eine hohe Transparenz bezüglich der Performance der eigenen Anlage und gibt dem Installateur wichtige Hinweise über die Systemperformance und unterstützt ihn bei eventuell notwendigen Wartungsarbeiten.

### Figur 9 zeigt Informationen über die Anlagenperformanz liefert ein Display

Die vorliegende Erfindung weist eine Vielzahl von Lösungsansätzen auf. die dem Energiesteuerungsvorrichtungsnutzer völlig neue Wege des intelligenten Energiemanagements aufweisen. Das System ist obendrein nach dem Bausatzprinzip konstruiert, so dass der Einbau durch den Fachinstallateur problemlos erfolgen kann. Auch bestehende PV-anlagen sind ohne weiteres nachrüstbar.

## Patentansprüche

1. Energiesteuerungsvorrichtung(110) für ein Energienetz mit
einer Energieerzeugungseinheit (113), insbesondere einer Photovoltaikeinheit, zum Erzeugen von Energie aus erneuerbaren Ressourcen,
einer Energiespeichereinheit (115) zum Speichern von Energie,
einer Messvorrichtung zum Ermitteln des Energieverbrauchs einer Lasteinheit (111) zum Verbrauchen von Energie,
einer Netzanschlusseinheit (114), insbesondere einer Wechselrichtereinheit, zum Verbinden der Energiesteuerungsvorrichtung (110) mit einem Energienetz (11, 13), zum Entnehmen von Energie aus dem Energienetz (13) und zum Zuführen von Energie in das Energienetz (11), und
einer Steuereinheit (117) zum Steuern eines Energieflusses zwischen der Energieerzeugungseinheit (113), der Energiespeichereinheit (115), der Lasteinheit (111) und/oder dem Energienetz (11, 13),
**dadurch gekennzeichnet, dass** die Steuereinheit ausgebildet ist, um die Menge der Energie, welche in das Energienetz eingespeist wird, in Abhängigkeit von der Menge der Energie, die von der Lasteinheit verbraucht wird, zu steuern
**dadurch gekennzeichnet, dass**
die Energieerzeugungseinheit (113) mit der Steuereinheit (117) solcherart signaltechnisch gekoppelt ist, dass nur genau die Menge der von der Lasteinheit (111) benötigten Energie von der Energieerzeugungseinheit (113) an die Wechselrichtereinheit geleitet wird und darüber hinaus erzeugte Energie ohne Durchlaufen der Wechselrichtereinheit direkt der Speichereinheit (115) zugeführt wird.

2. Energiesteuerungsvorrichtung (110) nach Anspruch 1,
wobei die Steuereinheit (117) ausgestattet ist, einen Energiefluss von der Energieerzeugungseinheit (113) an die Energiespeichereinheit (115) (11) zu veranlassen, wenn die erzeugte Energie den Energieverbrauch der Lasteinheit (111) übersteigt.

3. Energiesteuerungsvorrichtung (110) nach Anspruch 1 oder 2, wobei die Steuereinheit (117) ausgestaltet ist, einen Energiefluss von der Energieerzeugungseinheit (113) und/oder von der Energiespeichereinheit (115) zu dem Energienetz in einer Menge zu steuern, welche von der Menge der Energie, die von der Lasteinheit (111) aus dem Energienetz (13) entnommen wird, abhängt, vorzugsweise dieser Menge entspricht, insbesondere indem eine Entnahme einer Energiemenge auf einer oder einigen Phasen eines mehrphasigen Stromnetzes durch eine Einspeisung der gleichen Energiemenge auf einer oder einigen anderen Phasen des Energienetzes ausgeglichen wird.

4. Energiesteuerungsvorrichtung (110) nach einem der vorstehenden Ansprüche, wobei die Steuereinheit (117) ausgestaltet ist, den Energiefluss zu der Energiespeichereinheit (115) zu veranlassen, bis die Energiespeichereinheit (115) vollständig oder bis zu einem vorbestimmten Grad geladen ist.

5. Energiesteuerungsvorrichtung (110) nach einem der vorstehenden Ansprüche, wobei die Steuereinheit (117) eine Prädiktionseinheit (118) zum Vorherbestimmen des zu steuernden Energieflusses aufweist.

6. Energiesteuerungsvorrichtung (110) nach Anspruch 5. wobei die Prädiktionseinheit (118) ausgestaltet ist, den Energieverbrauch der Lasteinheit (111), insbesondere auf Basis eines Referenzzeitraumes und/oder Uhrzeit-, Wochentag-, und/oder Jahreszeitinformationen, und/oder die erzeugte Energie durch die Energieerzeugungseinheit (113), insbesondere auf Basis von Wetterinformationen, Referenzdaten und/oder Messdaten, vorherzubestimmen.

7. Energiesteuerungsvorrichtung (110) nach einem der vorstehenden Ansprüche, **dadurch gekennzeichnet, dass** die Energiespeichereinheit (115) mittels einer ersten Kondensatoreinheit und einer zweiten Kondensatoreinheit (155) mit der Energieerzeugungseinheit (113) und der Netzanschlusseinheit (114) verbunden ist.

8. Energiesteuerungsvorrichtung (110) nach dem vorstehenden Anspruch, wobei die Energiesteuerungsvorrichtung (110) ferner einen Laderegler (153) zum Regeln eines Aufladens der Energiespeichereinheit (115) aufweist, wobei der Laderegler (153) die erste Kondensatoreinheit aufweist und mittels der zweiten Kondensatoreinheit (155) mit der Energieerzeugungseinheit (113) und der Netzanschlusseinheit (114) verbunden ist.

9. Energiesteuerungsvorrichtung (110) nach einem der vorstehenden Ansprüche, **dadurch gekennzeichnet, dass** die Steuereinheit ausgebildet ist, um eine solche Menge an Energie ins Energienetz einzuspeisen, wie sie aus dem Energienetz entnimmt.

10. Energiesteuerungsvorrichtung (110) nach einem der vorstehenden Ansprüche, **gekennzeichnet durch** eine Lastanschlusseinheit zum Verbinden der Energiesteuerungsvorrichtung (110) mit einer Lasteinheit (111) zum Verbrauchen von Energie,

11. Verfahren zum Steuern eines Betriebes einer Energiesteuerungsvorrichtung (110) nach einem der vorstehenden Ansprüche mit dem Schritt Steuern eines Energieflusses zwischen der Energieerzeugungseinheit (113), der Energiespeichereinheit (115). der Lasteinheit (111) und/oder dem Energienetz (11, 13) in Abhängigkeit von der durch die Lasteinheit verbrauchten Energie.

12. Verfahren nach Anspruch 11 wobei das Verfahren ferner die Schritte aufweist Steuern eines Energieflusses von der Energieerzeugungseinheit (113) an die Energiespeichereinheit (115)), wenn die erzeugte Energie den Energieverbrauch der Lasteinheit (111) übersteigt.

13. Verfahren nach Anspruch 11 oder 12, wobei das Verfahren ferner den Schritt aufweist:
Steuern eines Energieflusses zu der Energiespeichereinheit (115), bis die Energiespeichereinheit (115) vollständig oder bis zu einem vorgegebenen Ladezustand geladen ist.

14. Verfahren nach einem der Ansprüche 11 bis 13, wobei das Verfahren ferner die Schritte aufweist:
Vorherbestimmen des Energieverbrauchs der Lasteinheit (111), insbesondere auf Basis eines Referenzzeitraumes und/oder Uhrzeit-, Wochentag-, und/oder Jahreszeitinformationen, und/oder
Vorherbestimmen der erzeugten Energie durch die Energieerzeugungseinheit (113), insbesondere auf Basis von Wetterinformationen, Referenzdaten und/oder Messdaten, und
Steuern des Energieflusses gemäß des vorbestimmten Energieverbrauchs und/oder der vorbestimmten erzeugten Energie

15. Verfahren nach einem der Ansprüche 11 bis 14, wobei das Verfahren ferner die Schritte aufweist:
- Einspeisen einer Menge an Energie aus der Energieerzeugungseinheit und/oder der Energiespeichereinheit in das Energienetz, welche der Menge an Energie, die von der Lasteinheit verbraucht wird, entspricht.

16. Verfahren nach einem der Ansprüche 11 bis 15,
**dadurch gekennzeichnet dass** eine solche Menge an Energie ins Energienetz eingespeist wird, wie aus dem Energienetz entnommen wird.

## Claims

1. Energy control device (110) for an energy network, having
an energy generation unit (113), in particular a photovoltaic unit, for generating energy from renewable resources,
an energy storage unit (115) for storing energy,
a measuring device for determining the energy consumption of a load unit (111) for consuming energy,
a network connection unit (114), in particular an inverter unit, for connecting the energy control device (110) to an energy network (11, 13) for the purpose of removing energy from the energy network (13) and supplying energy to the energy network (11), and
a control unit (117) for controlling an energy flow between the energy generation unit (113), the energy storage unit (115), the load unit (111) and/or the energy network (11, 13),
the control unit being designed to control the amount of energy fed into the energy network on the basis of the amount of energy consumed by the load unit,
**characterized in that**
the energy generation unit (113) is coupled to the control unit (117) in terms of signalling in such a manner that only exactly the amount of energy required by the load unit (111) is passed from the energy generation unit (113) to the inverter unit and additionally generated energy is supplied directly to the storage unit (115) without passing through the inverter unit.

2. Energy control device (110) according to Claim 1, the control unit (117) being configured to cause an energy flow from the energy generation unit (113) to the energy storage unit (115) if the generated energy exceeds the energy consumption of the load unit (111).

3. Energy control device (110) according to Claim 1 or 2, the control unit (117) being configured to control an energy flow from the energy generation unit (113) and/or from the energy storage unit (115) to the energy network in an amount which depends on, preferably corresponds to, the amount of energy removed from the energy network (13) by the load unit (111), in particular by compensating for removal of an amount of energy on one or several phases of a multiphase power supply system by feeding in the same amount of energy on one or several other phases of the energy network.

4. Energy control device (110) according to one of the preceding claims, the control unit (117) being configured to cause the energy flow to the energy storage unit (115) until the energy storage unit (115) has been completely charged or has been charged to a predetermined degree.

5. Energy control device (110) according to one of the preceding claims, the control unit (117) having a prediction unit (118) for predetermining the energy flow to be controlled.

6. Energy control device (110) according to Claim 5, the prediction unit (118) being configured to predetermine the energy consumption of the load unit (111), in particular on the basis of a reference period and/or information relating to the time, day of the week and/or season, and/or to predetermine the energy generated by the energy generation unit (113), in particular on the basis of weather information, reference data and/or measurement data.

7. Energy control device (110) according to one of the preceding claims, **characterized in that** the energy storage unit (115) is connected to the energy generation unit (113) and to the network connection unit (114) by means of a first capacitor unit and a second capacitor unit (155).

8. Energy control device (110) according to the preceding claim, the energy control device (110) also having a charging controller (153) for controlling charging of the energy storage unit (115), the charging controller (153) having the first capacitor unit and being connected to the energy generation unit (113) and to the network connection unit (114) by means of the second capacitor unit (155).

9. Energy control device (110) according to one of the preceding claims, **characterized in that** the control unit is designed to feed such an amount of energy into the energy network as it removes from the energy network.

10. Energy control device (110) according to one of the preceding claims, **characterized by** a load connection unit for connecting the energy control device (110) to a load unit (111) for consuming energy.

11. Method for controlling operation of an energy control device (110) according to one of the preceding claims, having the step of
controlling an energy flow between the energy generation unit (113), the energy storage unit (115), the load unit (111) and/or the energy network (11, 13) on the basis of the energy consumed by the load unit.

12. Method according to Claim 11, the method also having the steps of
controlling an energy flow from the energy generation unit (113) to the energy storage unit (115) if the generated energy exceeds the energy consumption of the load unit (111).

13. Method according to Claim 11 or 12, the method also having the step of:
controlling an energy flow to the energy storage unit (115) until the energy storage unit (115) has been completely charged or has been charged to a predefined state of charge.

14. Method according to one of Claims 11 to 13, the method also having the steps of:
predetermining the energy consumption of the load unit (111), in particular on the basis of a reference period and/or information relating to the time, day of the week and/or season, and/or
predetermining the energy generated by the energy generation unit (113), in particular on the basis of weather information, reference data and/or measurement data, and
controlling the energy flow according to the predetermined energy consumption and/or the predetermined generated energy.

15. Method according to one of Claims 11 to 14, the method also having the steps of:
- feeding an amount of energy from the energy generation unit and/or from the energy storage unit into the energy network which corresponds to the amount of energy consumed by the load unit.

16. Method according to one of Claims 11 to 15, **characterized in that** such an amount of energy is fed into the energy network as is removed from the energy network.

## Revendications

1. Dispositif de commande d'énergie (110) destiné à un réseau d'énergie comportant une unité génératrice d'énergie (113), notamment une unité photovoltaïque, destinée à générer de l'énergie à partir de ressources renouvelables,
une unité de stockage d'énergie (115) destinée à stocker de l'énergie,
un dispositif de mesure destiné à déterminer la consommation d'énergie d'une unité formant charge (111) destinée à consommer de l'énergie,
une unité de raccordement au réseau (114), notamment une unité à onduleur, destinée à connecter le dispositif de commande d'énergie (110) à un réseau d'énergie (11, 13) afin de prélever de l'énergie sur le réseau d'énergie (13) et d'acheminer de l'énergie dans le réseau d'énergie (11), et
une unité de commande (117) destinée à commander un flux d'énergie entre l'unité génératrice d'énergie (113), l'unité de stockage d'énergie (115), l'unité formant charge (111) et/ou le réseau d'énergie (11, 13),
dans lequel l'unité de commande est conçue pour commander la quantité d'énergie injectée dans le réseau d'énergie en fonction de la quantité d'énergie consommée par l'unité formant charge,
**caractérisé en ce que** l'unité génératrice d'énergie (113) est couplée par une technique d'échange de signaux à l'unité de commande (117) de manière à ce que seule la quantité exacte d'énergie nécessitée par l'unité formant charge (111) soit acheminée de l'unité génératrice d'énergie (113) à l'unité à onduleur et à ce qu'en outre l'énergie générée soit directement délivrée à l'unité de stockage (115) sans passer par l'unité à onduleur.

2. Dispositif de commande d'énergie (110) selon la revendication 1,
dans lequel l'unité de commande (117) est conçue pour provoquer le passage d'un flux d'énergie de l' unité génératrice d'énergie (113) à l'unité de stockage d'énergie (115) (11) lorsque l'énergie générée dépasse la consommation d'énergie de l'unité de charge (111).

3. Dispositif de commande d'énergie (110) selon la revendication 1 ou 2,
dans lequel l'unité de commande (117) est conçue pour commander un flux d'énergie de l'unité génératrice d'énergie (113) et/ou de l'unité de stockage d'énergie (115) vers le réseau d'énergie en une quantité qui dépend de la quantité d'énergie ou qui correspond à la quantité d'énergie prélevée sur le réseau d'énergie (13) par l'unité formant charge (111), en particulier en faisant en sorte qu'un prélèvement d'une quantité d'énergie sur une ou certaines phases d'un réseau électrique polyphasé soit équilibré par injection de la même quantité d'énergie sur une ou certaines autres phases du réseau d'énergie.

4. Dispositif de commande d'énergie (110) selon l'une quelconque des revendications précédentes, dans lequel l'unité de commande (117) est conçue pour autoriser le passage d'un flux d'énergie vers l'unité de stockage d'énergie (115) jusqu'à ce que l'unité de stockage d'énergie (115) soit entièrement chargée ou soit chargée à un degré prédéterminé.

5. Dispositif de commande d'énergie (110) selon l'une quelconque des revendications précédentes, dans lequel l'unité de commande (117) comporte une unité de prédiction (118) destinée à déterminer à l'avance le flux d'énergie devant être commandé.

6. Dispositif de commande d'énergie (110) selon la revendication 5, dans lequel l'unité de prédiction (118) est conçue pour déterminer à l'avance la consommation d'énergie de l'unité formant charge (111), notamment sur la base d'un intervalle de temps de référence et/ou d'informations d'heure, de jour et/ou d'année, et/ou l'énergie générée par l'unité génératrice d'énergie (113), notamment sur la base d'informations météorologiques, de données de référence et/ou de données de mesure.

7. Dispositif de commande d'énergie (110) selon l'une quelconque des revendications précédentes, **caractérisé en ce que** l'unité de stockage d'énergie (115) est reliée au moyen d'une première unité à condensateur et d'une deuxième unité à condensateur (155) à l'unité génératrice d'énergie (113) et à l'unité de raccordement au réseau (114).

8. Dispositif de commande d'énergie (110) selon la revendication précédente, dans lequel le dispositif de commande d'énergie (110) comporte en outre un régulateur de charge (153) destiné à réguler une charge de l'unité de stockage d'énergie (115), dans lequel le régulateur de charge (153) comporte la première unité à condensateur et est relié au moyen de la deuxième unité à condensateur (155) à l'unité génératrice d'énergie (113) et à l'unité de raccordement au réseau (114).

9. Dispositif de commande d'énergie (110) selon l'une quelconque des revendications précédentes, **caractérisé en ce que** l'unité de commande est réalisée de manière à injecter dans le réseau d'énergie une quantité d'énergie égale à celle qu'elle prélève sur le réseau d'énergie.

10. Dispositif de commande d'énergie (110) selon l'une quelconque des revendications précédentes, **caractérisé par** une unité de raccordement de charge destinée à relier le dispositif de commande d'énergie (110) à une unité formant charge (111) destinée à consommer de l'énergie.

11. Procédé de commande du fonctionnement d'un dispositif de commande d'énergie (110) selon l'une quelconque des revendications précédentes, comprenant l'étape consistant à :
commander un flux d'énergie entre l'unité génératrice d'énergie (113), l'unité de stockage d'énergie (115), l'unité formant charge (111) et/ou le réseau d'énergie (11, 13) en fonction de l'énergie consommée par l'unité formant charge.

12. Procédé selon la revendication 11, dans lequel le procédé comporte en outre l'étape consistant à :
commander un flux d'énergie de l'unité génératrice d'énergie (113) à l'unité de stockage d'énergie (115) lorsque l'énergie générée dépasse la consommation d'énergie de l'unité formant charge (111).

13. Procédé selon la revendication 11 ou 12, dans lequel le procédé comporte en outre l'étape consistant à :
commander un flux d'énergie vers l'unité de stockage d'énergie (115) jusqu'à ce que l'unité de stockage d'énergie (115) soit entièrement chargée ou jusqu'à ce qu'elle soit chargée à un état de charge prédéterminé.

14. Procédé selon l'une quelconque des revendications 11 à 13, dans lequel le procédé comporte en outre les étapes consistant à :
déterminer à l'avance la consommation d'énergie de l'unité formant charge (111), notamment sur la base d'un intervalle de temps de référence et/ou d'informations d'heure, de jour et/ou d'année, et/ou déterminer à l'avance l'énergie générée par l'unité génératrice d'énergie (113), notamment sur la base d'informations météorologiques, de données de référence et/ou de données de mesure, et
commander le flux d'énergie selon la consommation d'énergie prédéterminée et/ou l'énergie générée prédéterminée.

15. Procédé selon l'une quelconque des revendications 11 à 14, dans lequel le procédé comporte en outre les étapes consistant à :
injecter une quantité d'énergie provenant de l'unité génératrice d'énergie et/ou de l'unité de stockage d'énergie dans le réseau d'énergie, laquelle quantité correspond à la quantité d'énergie consommée par l'unité de charge.

16. Procédé selon l'une quelconque des revendications 11 à 15,
**caractérisé en ce qu'**une quantité d'énergie injectée dans le réseau d'énergie est égale à celle qui est prélevée sur le réseau d'énergie.
